# EUROPEAN PATENT APPLICATION

(11) **EP 4 793 121 A1**
(43) Date of publication of application: **19.08.2026**
(21) Application number: 25198005.8
(22) Date of filing: 26.08.2025
(51) Int. Cl.: B60W 30/02, B60W 30/045, B60W 30/18, B60T 8/1755

(54) **VEHICLE TURNING CONTROL APPARATUS AND METHOD AND VEHICLE AND STORAGE MEDIUM INCLUDING THE SAME**

(30) Priority: 13.02.2025 KR 20250018507
(71) Applicant: Hyundai Motor Company, Seoul 06797 (KR); Kia Corporation, Seoul 06797 (KR)
(72) Inventor: SONG, Jin Seok, 18280 Hwaseong-si, Gyeonggi-do (KR); LEE, Gi Heon, 18280 Hwaseong-si, Gyeonggi-do (KR); JEON, Kweon Soo, 18280 Hwaseong-si, Gyeonggi-do (KR); GA, Han Seon, 18280 Hwaseong-si, Gyeonggi-do (KR)
(74) Representative: Isarpatent

(57) **Abstract**

A vehicle turning control apparatus includes a controller controlling a front wheel motor driving a front wheel of a vehicle and a rear wheel motor driving a rear wheel of the vehicle based on a sensing value detected by a sensor unit of the vehicle, wherein the controller may determine whether the vehicle satisfies a predetermined turning state condition based on the sensing value of the sensor unit, and control at least one of the front wheel motor or the rear wheel motor so that a slip value of at least one of the front wheel or the rear wheel follows a slip target value or a slip target distribution ratio based on the sensing value of the sensor unit, in a turning control mode in which the vehicle satisfies the predetermined turning state condition.

## Description

### BACKGROUND

### 1. FIELD

The present disclosure relates to a vehicle turning control apparatus and method and a vehicle and a storage medium including the same.

### 2. DESCRIPTION OF RELATED ART

In general, a vehicle may include an active safety device to actively stabilize an attitude of a vehicle body. For example, an active safety device may include a traction control system (TCS), an anti-lock brake system (ABS), and an electronic stability program (ESP).

For example, an ESP may control stability of a vehicle during turning, and may determine whether a state of the vehicle during turning is understeer or oversteer, and then control a yaw moment of the vehicle through an engine/motor torque and a brake of each wheel according to each situation to stabilize the vehicle.

### BRIEF SUMMARY

A vehicle turning control apparatus and method and a vehicle and a storage medium including the same according to an exemplary embodiment of the present disclosure may more accurately and rapidly control turning of a vehicle (V) based on a slip principle in a situation in which a slip value dynamically changes, such as a turning state, and may efficiently improve turning stability of the vehicle (V).

According to an exemplary embodiment of the present disclosure, a vehicle turning control apparatus may include a controller configured for controlling a front wheel motor driving a front wheel of a vehicle and a rear wheel motor driving a rear wheel of the vehicle based on a sensing value detected by a sensor unit of the vehicle, wherein the controller may be configured to determine whether the vehicle satisfies a predetermined turning state condition based on the sensing value of the sensor unit, and control at least one of the front wheel motor or the rear wheel motor so that a slip value of at least one of the front wheel or the rear wheel follows a slip target value or a slip target distribution ratio based on the sensing value of the sensor unit, in a turning control mode in which the vehicle satisfies the predetermined turning state condition.

The controller may be configured for controlling at least one of the front wheel motor and the rear wheel motor so that, in a basic control mode in which the vehicle does not satisfy a predetermined turning state condition, a control gain of a torque demand value of the sensor unit is further increased, as compared to a control gain of a torque demand value in the turning control mode, and the torque demand value is distributed to at least one of the front wheel and the rear wheel.

The controller may be configured to determine a turning index value based on a sensing value of the sensor unit, and determine the slip target value or the slip target distribution ratio based on the turning index value.

The turning index value includes a steering index value, and the controller may be configured to determine a target yaw rate value based on a steering angle value and a vehicle speed value of the sensor unit, and determine the steering index value based on a difference between the target yaw rate value and a vehicle yaw rate value of the sensor unit.

The controller may estimate a friction coefficient of the vehicle with respect to the ground based on at least one of a vehicle yaw acceleration, a vehicle longitudinal acceleration value, a vehicle lateral acceleration value, and a motor torque value of the sensor unit, and determine a stability index value based on at least two of a vehicle yaw rate value, a vehicle speed value, a torque demand value, the vehicle yaw acceleration, the vehicle longitudinal acceleration value, and the vehicle lateral acceleration value of the sensor unit and the friction coefficient, wherein the turning index value may further include the stability index value.

The stability index value includes a turning external wheel instability factor value, a basic slip target correction amount value, and an additional slip target value, wherein the controller may be configured to determine the basic slip target correction amount value based on at least one of the friction coefficient and the vehicle speed value and the steering index value, and determine the additional slip target value based on at least one of the friction coefficient and the vehicle speed value and the torque demand value, and determine the turning external wheel instability factor value based on at least one of the friction coefficient and the vehicle speed value, and at least two of a torque value of at least one of the front wheel motor and the rear wheel motor, a turning external wheel slip value of the vehicle, and the vehicle lateral acceleration value.

The turning index value further includes a stability index value, wherein the controller may be configured to determine the stability index value based on at least one of a vehicle yaw rate value, a vehicle speed value, and a torque demand value of the sensor unit, determine a total slip target value based on the stability index value, and determine the slip target value or the slip target distribution ratio according to the distribution of the total slip target value based on the steering index value.

When the steering index value corresponds to oversteer, the controller may be configured for controlling at least one of the front wheel motor and the rear wheel motor, so that a slip target value or a slip target distribution ratio of the front wheel is further increased as an absolute value of the steering index value increases, and when the steering index value corresponds to understeer, the controller may be configured for controlling at least one of the front wheel motor and the rear wheel motor so that the slip target value or the slip target distribution ratio of the front wheel is further reduced as the absolute value of the steering index value increases.

The controller may be configured for controlling at least one of the front wheel motor and the rear wheel motor so that an offset of a slip target value or a slip target distribution ratio of the front wheel changes according to an inclination of the steering index value, in a low-friction understeer control mode in which the steering index value corresponds to understeer and a friction coefficient of the vehicle with respect to the ground is lower than a reference friction.

The controller, as compared to in a high-friction understeer control mode in which the steering index value corresponds to understeer and a friction coefficient of the vehicle with respect to the ground is higher than a reference friction range, may be configured for controlling at least one of the front wheel motor and the rear wheel motor by applying an offset, which is more sensitive to an inclination of the steering index value, to a slip target value or a slip target distribution ratio of the front wheel, in a low- friction understeer control mode in which the steering index value corresponds to understeer and the friction coefficient is lower than the reference friction range, and control at least one of the front wheel motor and the rear wheel motor by applying a smaller offset than the offset of the low-friction understeer control mode to the slip target value or the slip target distribution ratio of the front wheel, when the steering index value corresponds to understeer and the friction coefficient is within the reference friction range.

The controller may be configured for controlling at least one of the front wheel motor and the rear wheel motor by applying an offset, which is more sensitive to a sensing value of the sensor unit as a friction coefficient of the vehicle with respect to the ground decreases to a slip target value or a slip target distribution ratio of the front wheel, when the steering index value corresponds to understeer.

The controller may estimate the friction coefficient based on at least one of a vehicle yaw acceleration, a vehicle longitudinal acceleration value, a vehicle lateral acceleration value, and a motor torque value of the sensor unit, and may be configured for controlling at least one of the front wheel motor and the rear wheel motor so that a slip target value or a slip target distribution ratio of the front wheel is more sensitive to the friction coefficient when the steering index value corresponds to understeer as compared to the case in which the steering index value corresponds to oversteer.

The vehicle turning control apparatus includes a controller configured for controlling a front wheel motor driving a front wheel of a vehicle and a rear wheel motor driving a rear wheel of the vehicle based on a sensing value detected by a sensor unit of the vehicle, wherein the controller may be configured to determine a target yaw rate value based on a steering angle value and a vehicle speed value of the sensor unit, and determine a steering index value based on a difference between the target yaw rate value and a vehicle yaw rate value of the sensor unit, the controller may be configured for controlling at least one of the front wheel motor and the rear wheel motor so that, when the steering index value corresponds to oversteer, a slip target value or a slip target distribution ratio of the front wheel is further increased as an absolute value of the steering index value increases, and the controller may be configured for controlling at least one of the front wheel motor and the rear wheel motor so that, when the steering index value corresponds to understeer, the slip target value or the slip target distribution ratio of the front wheel is further reduced as the absolute value of the steering index value increases.

The controller may be configured to determine a stability index value based on at least one of a vehicle yaw rate value, a vehicle speed value, and a torque demand value of the sensor unit, determine a total slip target value based on the stability index value, and determine the slip target value or the slip target distribution ratio according to the distribution of the total slip target value based on the steering index value.

The controller may estimate a friction coefficient of the vehicle with respect to the ground based on at least one of a vehicle yaw acceleration, a vehicle longitudinal acceleration value, a vehicle lateral acceleration value, and a motor torque value of the sensor unit, and may be configured to determine the stability index value based on at least two of a vehicle yaw rate value, a vehicle speed value, a torque demand value, and the vehicle yaw acceleration, the vehicle longitudinal acceleration value, and the vehicle lateral acceleration value of the sensor unit and the friction coefficient.

The controller may be configured for controlling at least one of the front wheel motor and the rear wheel motor so that a slip target value or a slip target distribution ratio of the front wheel is more sensitive to the friction coefficient when the steering index value corresponds to understeer as compared to the case in which the steering index value corresponds to oversteer.

The controller may be configured for controlling at least one of the front wheel motor and the rear wheel motor so that a slip target value or a slip target distribution ratio of the front wheel is more sensitive to an inclination of the steering index value when the steering index value corresponds to understeer as compared to the case in which the steering index value corresponds to oversteer.

A vehicle according to an exemplary embodiment of the present disclosure may include the vehicle turning control apparatus, the sensor unit, the front wheel motor, and the rear wheel motor.

According to an aspect of the present disclosure, a turning control method may include determining whether a vehicle satisfies a predetermined turning state condition based on a sensing value detected by a sensor unit of the vehicle; determining a turning index value including a steering index value based on the sensing value of the sensor unit; determining a slip target value or a slip target distribution ratio based on the turning index value; and controlling at least one of a front wheel motor and a rear wheel motor so that a slip value of at least one of the front wheel and the rear wheel of the vehicle follows the slip target value or the slip target distribution ratio, in a turning control mode in which the vehicle satisfies a predetermined turning state condition, wherein the determining of the slip target value or the slip target distribution ratio includes, further increasing the slip target value or the slip target distribution ratio of the front wheel as an absolute value of the steering index value increases, when the steering index value corresponds to oversteer, and further reducing the slip target value or the slip target distribution ratio of the front wheel as the absolute value of the steering index value increases, when the steering index value corresponds to understeer.

For example, a storage medium may record one or more programs including commands for executing the vehicle turning control method.

### BRIEF DESCRIPTION OF DRAWINGS

The above and other aspects, features, and advantages of the present disclosure will be more clearly understood from the following detailed description, taken in conjunction with the accompanying drawings.
FIG. 1A is a diagram illustrating a vehicle including a vehicle turning control apparatus according to an exemplary embodiment of the present disclosure.
FIG. 1B is a block diagram illustrating a controller and a sensor unit of a vehicle turning control apparatus according to an exemplary embodiment of the present disclosure.
FIG. 2A and FIG. 2B are block diagrams illustrating a controller of a vehicle turning control apparatus according to an exemplary embodiment of the present disclosure.
FIG. 3A and FIG. 3B are flowcharts illustrating a vehicle turning control apparatus and method apparatus according to an exemplary embodiment of the present disclosure.
FIG. 4A is a diagram illustrating a vehicle turning control apparatus and method according to an exemplary embodiment of the present disclosure determining a steering index value corresponding to oversteer.
FIG. 4B is a diagram illustrating a vehicle turning control apparatus and method according to an exemplary embodiment of the present disclosure determining a steering index value corresponding to understeer.
FIG. 5A, FIG. 5B, FIG. 5C, and FIG. 5D are diagrams illustrating a vehicle turning control apparatus and method according to an exemplary embodiment of the present disclosure determining a stability index value that may be included in a turning index value.
FIG. 6A is a diagram illustrating a vehicle turning control apparatus and method according to an exemplary embodiment of the present disclosure, further increasing a slip target value or a slip target distribution ratio of a front wheel based on a steering index value corresponding to oversteer.
FIG. 6B is a diagram illustrating a vehicle turning control apparatus and method according to an exemplary embodiment of the present disclosure, further reducing a slip target value or a slip target distribution ratio of a front wheel based on a steering index value, in a high-friction understeer control mode.
FIG. 6C and FIG. 6D are diagrams illustrating a vehicle turning control apparatus and method according to an exemplary embodiment of the present disclosure, further reducing a slip target value or a slip target distribution ratio of a front wheel based on a steering index value, in a low-friction understeer control mode, and applying an offset of the slip target value or the slip target distribution ratio of the front wheel based on an inclination of the steering index value.
FIG. 6E is a diagram illustrating a vehicle turning control apparatus and method according to an exemplary embodiment of the present disclosure, mixing a high-friction understeer control mode and a low-friction understeer control mode when a friction coefficient is within a reference friction range.
FIG. 6F is a diagram illustrating a vehicle turning control apparatus and method according to an exemplary embodiment of the present disclosure estimating a friction coefficient.
FIG. 6G is a graph illustrating a release routine strategy for stably releasing a turning control mode, in a vehicle turning control apparatus and method according to an exemplary embodiment of the present disclosure.
FIG. 7 is a graph illustrating an understeer control mode and an oversteer control mode while a vehicle speed gradually increases, in a vehicle turning control apparatus and method according to an exemplary embodiment of the present disclosure.

### DETAILED DESCRIPTION

Since the present disclosure may have various changes and may have various exemplary embodiments of the present disclosure, specific embodiments may be illustrated in the drawings and described in detail. However, this is not intended to limit the present disclosure to specific embodiments, it should be understood to include all modifications, equivalents, and substitutes included in the spirit and technical scope of the present disclosure.

Terms such as first, second, and the like may be used to describe various elements, but the elements should not be limited by the terms. The above terms may be used only for distinguishing one component from another. For example, without departing from the scope of the present disclosure, a first component may be referred to as a second component, and similarly, a second component may also be referred to as a first component. The term "and/or" may include a combination of a plurality of related listed items or any of the plurality of related listed items.

The terms used in the present application may be only used to describe specific embodiments, and are not intended to limit the present disclosure. The singular expression may include the plural expression, unless the context clearly dictates otherwise. In the present application, it should be understood that terms such as "include," "comprise," or "have" are intended to designate that features, numerals, steps, operations, components, parts, or combination thereof described in the specification exists, but one or more other features this does not preclude the existence or addition of numbers, steps, operations, components, parts, or combinations thereof.

Unless defined otherwise, all terms used herein, including technical or scientific terms, have the same meaning as that which can commonly understood by one of ordinary skill in the art to which the present disclosure belongs. Terms such as those defined in a commonly used dictionary should be interpreted as having a meaning consistent with the meaning in the context of the related art, and should not be interpreted in an ideal or excessively formal manner unless explicitly defined in the present application.

Unless defined otherwise, all terms used herein, including technical or scientific terms, have the same meaning as that which can commonly understood by one of ordinary skill in the art to which the present disclosure belongs. Terms such as those defined in a commonly used dictionary should be interpreted as having a meaning consistent with the meaning in the context of the related art, and should not be interpreted in an ideal or excessively formal manner unless explicitly defined in the present application.

Hereinafter, exemplary embodiments of the present disclosure will be described in more detail with reference to the appended drawings.

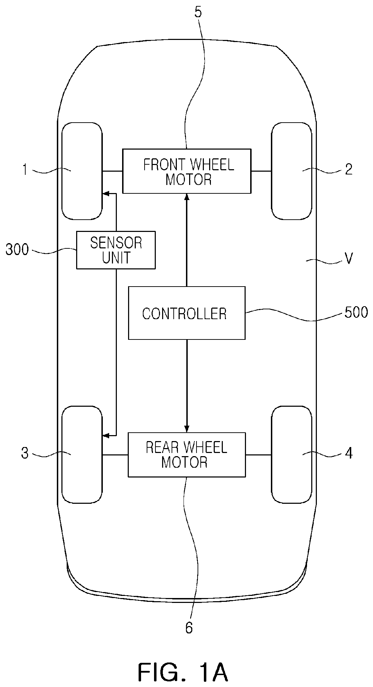

Referring to FIG. 1A, a vehicle turning control apparatus according to an exemplary embodiment of the present disclosure may include a controller 500 controlling a front wheel motor 5 driving front wheels 1 and 2 of a vehicle (V) and a rear wheel motor 6 driving rear wheels 3 and 4 of the vehicle (V) based on a sensing value of a sensor unit 300 of the vehicle (V). That is, the controller 500 may be configured for controlling the front wheel motor 5 and the rear wheel motor 6 in a four wheel drive (4WD) manner. For example, the controller 500 may include a Vehicle Control Unit (VCU) and/or a microcontroller unit (MCU).

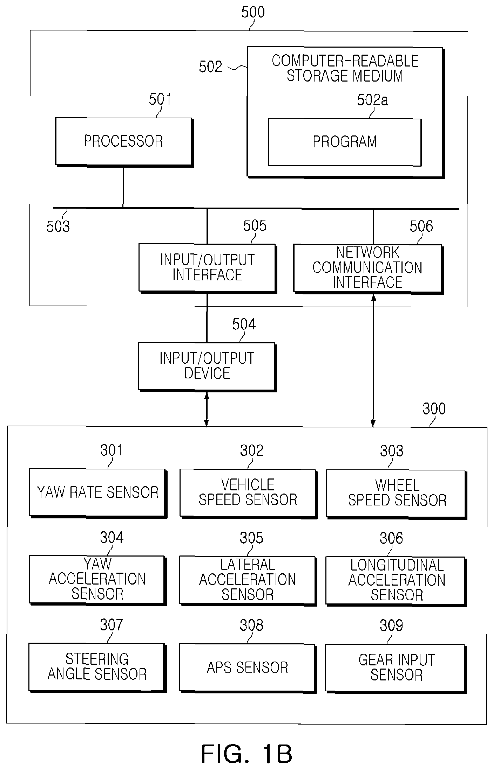

Referring to FIG. 1B, the sensor unit 300 may include at least one of a yaw rate sensor 301, a vehicle speed sensor 302, a wheel speed sensor 303, a yaw acceleration sensor 304, a lateral acceleration sensor 305, a longitudinal acceleration sensor 306, a steering angle sensor 307, an APS sensor 308, and a gear input sensor 309.

The yaw rate sensor 301 may sense a yaw rate value of the vehicle (V) in real time, and may be included in the sensing value of the sensor unit 300. Yaw rate is a rate at which an attitude of the vehicle (V) rotates in a yaw direction, and the yaw direction is a direction in which the vehicle (V) faces the ground (i.e., a direction of gravity).

The vehicle speed sensor 302 may sense the vehicle speed value of the vehicle (V) in real time, and may be included in the sensing value of the sensor unit 300. The wheel speed sensor 303 may sense a rotation speed value (RPM, revolutions per minute) of each of the front wheels 1 and 2 and the rear wheels 3 and 4 in real time, and may be included in the sensing value of the sensor unit 300. The vehicle speed value may include a longitudinal (straight direction) vehicle speed value and a lateral (straight direction perpendicular to the ground) vehicle speed value, and the vehicle speed value may be a value obtained by vector operation of the longitudinal vehicle speed value and the lateral vehicle speed value. Depending on the design, the longitudinal vehicle speed value and the lateral vehicle speed value may be replaced by an integral value of the lateral acceleration sensor 305 and the longitudinal acceleration sensor 306 (e.g., an integral value determined by a controller).

The yaw acceleration sensor 304 may sense a yaw acceleration value of the vehicle (V) in real time, the lateral acceleration sensor 305 may sense a lateral acceleration value of the vehicle (V) in real time, and the longitudinal acceleration sensor 306 may detect a longitudinal acceleration value of the vehicle (V) in real time. At least one of the yaw acceleration value, the lateral acceleration value, and the longitudinal acceleration value may be included in the sensing value of the sensor unit 300. Depending on the design, the yaw acceleration value may be replaced by a derivative value of the vehicle yaw rate value detected by the yaw rate sensor 301 (e.g., a derivative determined by the controller), and the lateral acceleration value and the longitudinal acceleration value may be replaced with a derivative value of the vehicle speed value detected by the vehicle speed sensor 302 (when it includes a lateral vehicle speed value and a longitudinal vehicle speed value).

The steering angle sensor 307 may detect in real time a steering angle value operated by a driver (e.g., a rotation angle of a vehicle steering wheel), the accelerator pedal sensor (APS) 308 may detect in real time a driver's torque demand value (e.g., a moving distance by an accelerator pedal), and the gear input sensor 309 may detect in real time a driver's gear input value (e.g., whether a rear gear is input, and whether a neutral gear is input. At least one of a steering angle value, a torque demand value, and a gear input value may be included in a sensing value of the sensor unit 300.

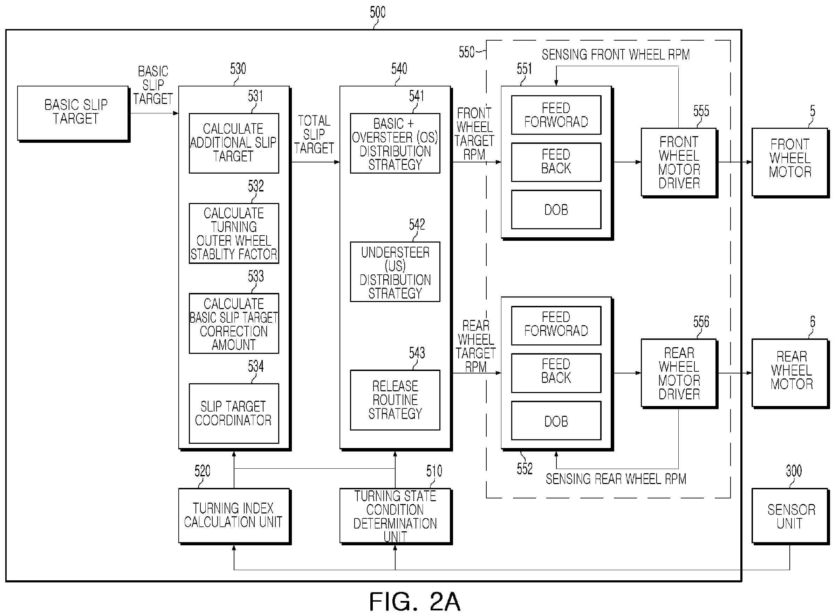

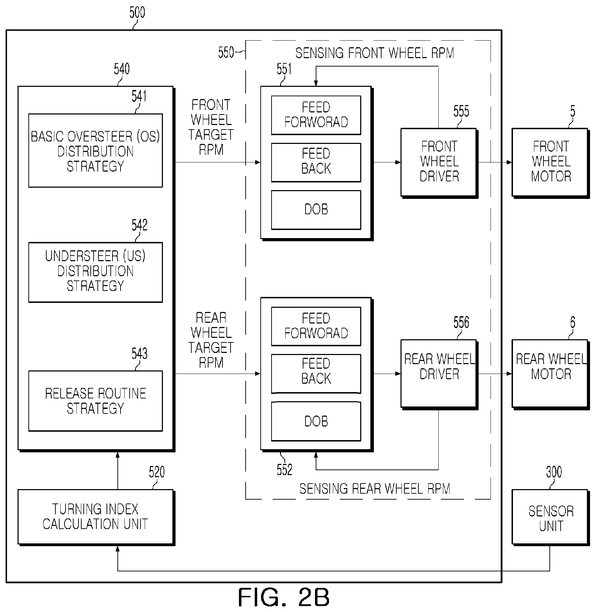

Referring to FIGS. 2A and 2B, a controller 500 may include a turning index calculation unit 520, a slip target distribution unit 540, and a motor control unit 550. Referring to FIG. 2A, the controller 500 may further include a turning state condition determination unit 510 and a total slip target value calculation unit 530.

Referring to FIGS. 2A to 3A, the turning state condition determination unit 510 of the controller 500 may be configured to determine whether a vehicle (V) satisfies a predetermined turning state condition based on a sensing value of the sensor unit 300 (S511).

For example, a predetermined turning state condition may include a turning state entry condition and a turning state release condition. The time for satisfying a predetermined turning state condition may start immediately after satisfying the turning state entry condition and end immediately after a certain time period has elapsed after satisfying the turning state release condition.

For example, the turning state entry conditions may include Table 1 below, preconditions of the turning state entry conditions may include Table 2 below, the turning state release conditions may include Table 3 below, and preconditions of the turning state release conditions may include Table 4 below. In Tables 1 to 4, a plurality of conditions grouped with AND mean a condition satisfying all of the plurality of conditions, and a plurality of conditions grouped with OR mean a condition satisfying at least one of the plurality of conditions.

**[Table 1]**

| | Preconditions in Table 2 are satisfied | | |
|---|---|---|---|
| AND | OR | AND | When an absolute value of lateral acceleration is 5m/s² or more |
| | | | When a vehicle speed is a specific vehicle speed |
| | | in an oversteer (OS) state | |
| | | in an understeer (US) state | |

**[Table 2]**

| | |
|---|---|
| AND | In the case of forward driving state |
| | When a vehicle speed is a specific vehicle speed or more |
| | Front wheel traction control system (TCS) control activated |
| | Rear wheel traction control system (TCS) control activated |
| | When a spare tire is not detected |
| | When a chassis intervention torque is stabilized after an anti-lock brake system (ABS) is released |
| | When an anti-lock brake system (ABS) is not activated |

**[Table 3]**

| | Release conditions in Table 4 are satisfied | | |
|---|---|---|---|
| A N D | OR | AND | Determination of straight-driving continues for a certain time period |
| | | | Conditions for preventing a sense of shock |
| | | When immediate release condition among release conditions in Table 4 is satisfied | |

**[Table 4]**

| | | |
|---|---|---|
| OR | Preconditions in Table 2 are not satisfied | |
| | A | not in an oversteer (OS) state |
| | N D | not in an understeer (US) state |
| | | in a straight-driving state |
| | OR | When a driver brakes (immediate release conditions) |
| | | When switched to 2-wheel driving (2WD) mode (immediate release conditions) |
| | When a failure is detected in a failure detection module (CAN communication, sensor error detection, motor failure, or the like) | |
| | When a gear is changed to R or N or not to D (immediate release condition) | |

When the vehicle (V) satisfies a predetermined turning state condition, the controller 500 may operate in a turning control mode (S512), and activate a turning index calculation unit 520, a total slip target value calculation unit 530, and a slip target distribution unit 540.

When the vehicle (V) does not satisfy a predetermined turning state condition, the controller 500 may operate in a basic control mode (S513), and deactivate the turning index calculation unit 520, the total slip target value calculation unit 530, and the slip target distribution unit 540. In the basic control mode (S513), the controller 500 may be configured for controlling the front wheel motor 5 and the rear wheel motor 6 based on the torque demand value of the APS sensor 308 in FIG. 1B of the sensor unit 300.

In the turning control mode (S512), the controller 500 may be configured for controlling (S550) the front wheels 1 and 2 of FIG. 1A and/or the rear wheels 3 and 4 of FIG. 1A so that a slip value (e.g., a slip ratio) of the front wheels 1 and 2 of FIG. 1A and/or the rear wheels 3 and 4 of FIG. 1A follows a slip target value or slip target distribution ratio based on the sensing value of the sensor unit 300.

A slip value is a value indicating how much the front wheels 1 and 2 (in FIG. 1A) and/or the rear wheels 3 and 4 (in FIG. 1A) slip on the ground, and may correspond to a difference value between a rotation speed value (RPM) detected by the wheel speed sensor 303 (in FIG. 1B) of the sensor unit 300 and a vehicle speed value detected by the vehicle speed sensor 302 (in FIG. 1B) of the sensor unit 300. The slip value may include a slip ratio, and the slip ratio is a value obtained by dividing the rotation speed value (RPM) or the vehicle speed value by the difference value (rotation speed value (RPM) - vehicle speed value).

When the vehicle (V) is moving straight, torque may be a more effective principle than slip to control a front wheel motor 5 and a rear wheel motor 6. However, when the vehicle (V) turns, slip may be a more effective principle than torque to stably control the front wheel motor 5 and the rear wheel motor 6.

For example, the torque applied to the front wheels 1 and 2 (in FIG. 1A) and the rear wheels 3 and 4 (in FIG. 1A) may affect a rotation speed of the front wheels 1 and 2 (in FIG. 1A) and/or the rear wheels 3 and 4 (in FIG. 1A), but a correlation between the torque and the rotation speed may vary depending on a slip value of the front wheels 1 and 2 (in FIG. 1A) and/or the rear wheels 3 and 4 (in FIG. 1A). Therefore, in a situation in which the slip value changes dynamically, such as in a turning state, torque may be a difficult principle to use to improve turning control accuracy.

On the other hand, the controller 550 may more directly and accurately control the slip value (corresponding to the difference between the rotation speed value (RPM) and the vehicle speed value) by controlling the rotation speed value of the front wheels 1 and 2 (in FIG. 1A) and/or the rear wheels 3 and 4 (in FIG. 1A). Therefore, in a situation in which the slip value changes dynamically, such as in a turning state, slip may be a principle that can control turning of the vehicle (V) more accurately and rapidly, and efficiently improve turning stability of the vehicle (V). That is, the vehicle turning control apparatus according to an exemplary embodiment of the present disclosure may be configured for controlling the turning of the vehicle (V) more accurately and rapidly in a situation in which the slip value dynamically changes, such as in a turning state, and may efficiently improve the turning stability of the vehicle (V).

The controller 500 may be configured for controlling a ratio of a slip target value (a slip target distribution ratio) of the front wheels 1 and 2 (in FIG. 1A) to the total slip target value of the front wheels 1 and 2 (in FIG. 1A) and the rear wheels 3 and 4 (in FIG. 1A). For example, the controller 500 may be configured for controlling the slip target distribution ratio by controlling the slip target value of the front wheels 1 and 2 (in FIG. 1A) while maintaining the slip target value of the rear wheels 3 and 4 (in FIG. 1A) (or controlling the same in the opposite direction to the front wheels).

The slip value in real time follows a slip target value, which may be implemented that the slip value in real time transitions so that a difference between the slip value in real time and the slip target value converges to 0. For example, the controller 500 may change a rotation speed of the front wheels 1 and 2 (in FIG. 1A) and/or the rear wheels 3 and 4 (in FIG. 1A) more rapidly as the difference between the slip target value and the slip value in real time increases, and may reduce a change speed of the rotation speed as the difference decreases. For example, the controller 500 may further increase or decrease the rotation speed by increasing or decreasing the slip target value, and the torque of the front wheels 1 and 2 (in FIG. 1A) and/or the rear wheels 3 and 4 (in FIG. 1A) may naturally change as the rotation speed changes.

In the turning control mode (S512), the controller 500 may not use a torque demand value of an APS sensor 308 of the sensor unit 300, or may use the same indirectly (e.g., correct a slip target value). Therefore, the torque demand value may be used with a greater proportion in the basic control mode (S513) than in the turning control mode (S512).

For example, in the basic control mode (S513), the controller 500 may be configured for controlling a control gain (e.g., 1) of a torque demand value of the APS sensor 308 (in FIG. 1B) to be further increased as compared to a control gain (e.g., 0) of the torque demand value in the turning control mode (S512), and control the front wheels 1 and 2 (in FIG. 1A) and/or the rear wheels 3 and 4 (in FIG. 1A) so that the torque demand value is distributed to the front wheels 1 and 2 (in FIG. 1A) and/or the rear wheels 3 and 4 (in FIG. 1A).

A sensing value of the sensor unit 300 when the vehicle (V) turns may be used as data for the controller 500 to dynamically determine a real-time turning state (e.g., oversteer state, understeer state) of the vehicle (V). Slip may be an effective principle for the controller 500 to dynamically determine the turning state, and the controller 500 may dynamically determine the slip target value or the slip target distribution ratio based on the turning state. A parameter quantitatively representing the turning state may be a turning index value below, and the turning index value may be generally determined based on slip. Slip may be effective in quantifying the turning index value.

Referring to FIGS. 2A to 3A, the turning index calculation unit 520 of the controller 500 may be configured to determine a turning index value based on a sensing value of the sensor unit 300 (S520), and the total slip target value calculation unit 530 and/or the slip target distribution unit 540 of the controller 500 may be configured to determine a slip target value or a slip target distribution ratio based on the turning index value (S535).

For example, the turning index value may include a steering index value and/or a stability index value. The total slip target value calculation unit 530 of the controller 500 may be configured to determine a total slip target value based on a stability index value (S530), and the slip target distribution unit 540 of the controller 500 may be configured to determine a slip target value or a slip target distribution ratio according to the distribution of the total slip target value based on the steering index value (S540).

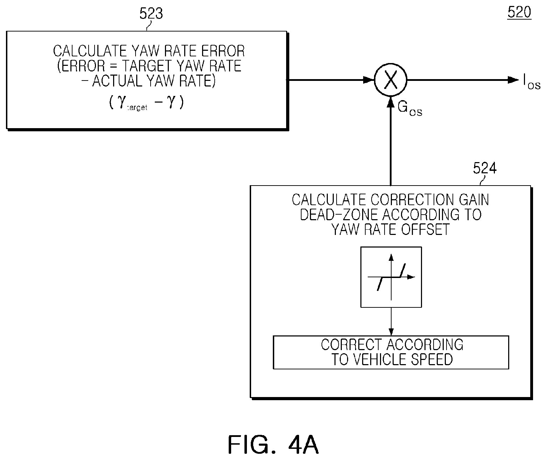

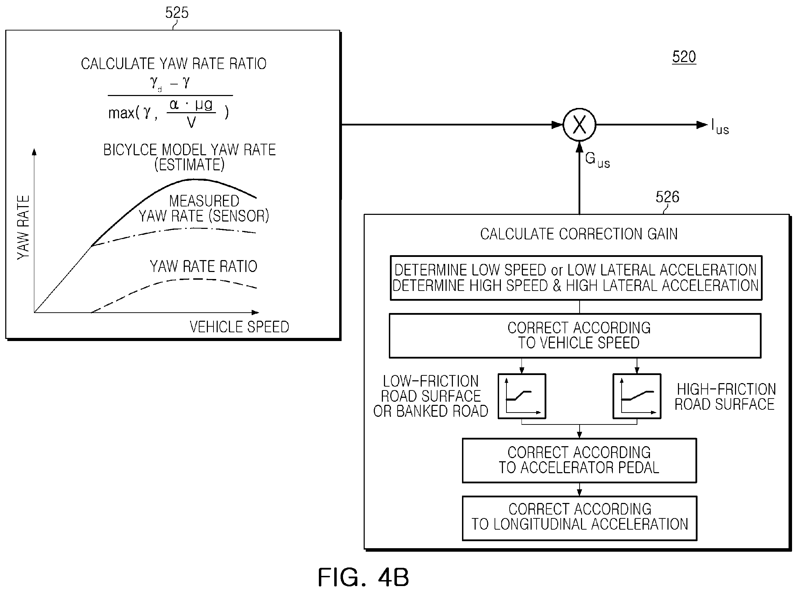

Referring to FIGS. 2B, 3B, 4A, and 4B, the turning index calculation unit 520 of the controller 500 may be configured to determine a target yaw rate value ( · ......in mathematical expression 1) based on the steering angle value (δ in mathematical expression 1) and the vehicle speed value (Vx in mathematical expression 1), and determine a steering index value (I_{OS} in FIG. 4A or I_{US} in FIG. 4B) based on a difference (yaw rate error)( · ...... - ·) between the target yaw rate value ( · ...... in mathematical expression 1 and FIGS. 4A-4B) and the vehicle yaw rate value ( · in FIGS. 4A-4B) of the sensor unit 300 (S521).

For example, the turning index calculation unit 520 of the controller 500 may be configured to determine a target yaw rate value based on the following mathematical expression 1. In mathematical expression 1, L may be a constant determined based on a structure of the front wheels 1 and 2 (in FIG. 1A) (e.g., a distance between a plurality of front wheels, a diameter of each of the plurality of front wheels, or the like), and Chu may be a constant determined by tuning the vehicle speed to fit mathematical expression 1 based on a performance test.$⋅ … … = \frac{⋅ ∗ ⋅ ⋅}{\left[\frac{⋅ ⋅}{⋅ h ⋅}+1\right] ∗ ⋅}$

The turning index calculation unit 520 of the controller 500 may be configured to determine whether a steering index value (I_{OS} in FIG. 4A or I_{US} in FIG. 4B) corresponds to oversteer (OS) or understeer (US) (S522).

When the yaw rate error ( . ...... - ·) is positive (523 in FIG. 4A), the steering index value (I_{OS} in FIG. 4A) may correspond to oversteer. The yaw rate error ( · ...... - ·) is positive, which may mean that a vehicle's yaw direction is slower than driver's steering. Accordingly, when the steering index value corresponds to oversteer, the slip target distribution unit 540 of the controller 500 may further increase a slip target value or a slip target distribution ratio of the front wheels 1 and 2 (in FIG. 1A) as an absolute value of the steering index value (or yaw rate error) increases (S541), and the motor control unit 550 of the controller 500 may be configured for controlling the front wheel motor 5 and/or the rear wheel motor 6 (e.g., increase a front wheel rotation speed and/or reduce a rear wheel rotation speed) based on the increased slip target value or slip target distribution ratio.

When the yaw rate error ( · ...... - ·) is negative (525 of FIG. 4A), the steering index value (I_{OS} of FIG. 4A) may correspond to understeer. The yaw rate error ( · ...... - · ) is negative, which may mean that a vehicle's yaw direction is faster than driver's steering. Accordingly, when the steering index value corresponds to understeer, the slip target distribution unit 540 of the controller 500 may further reduce a slip target value or a slip target distribution ratio of the front wheels 1 and 2 (in FIG. 1A) as an absolute value of the steering index value (or yaw rate error) increases (S542), and the motor control unit 550 of the controller 500 may be configured for controlling the front wheel motor 5 and/or the rear wheel motor 6 (e.g., reduce a front wheel rotation speed and/or increase a rear wheel rotation speed) based on the reduced slip target value or slip target distribution ratio.

Accordingly, the vehicle turning control apparatus according to an exemplary embodiment of the present disclosure may be configured for controlling the turning of the vehicle (V) more accurately and rapidly in a situation in which the slip value dynamically changes, such as a turning state, and may efficiently improve the turning stability of the vehicle (V).

For example, the turning index calculation unit 520 of the controller 500 may be configured to determine (524 of FIG. 4A) the steering index value (I_{OS} of FIG. 4A) by multiplying a yaw rate error ( · ...... - · ) by a correction gain (Gos of FIG. 4A) when the yaw rate error ( · ...... - · ) is positive (523 of FIG. 4A). For example, the correction gain (G_{OS} of FIG. 4A) may be determined to have a control dead-zone which prevents the motor control unit 550 of the controller 500 from performing sensitive control in a specific situation (e.g., a situation in which a yaw rate error is smaller than a reference value), and may be additionally corrected (e.g., the reference value is changed) depending on the vehicle speed.

For example, the turning index calculation unit 520 of the controller 500 may be configured to determine (526 in FIG. 4B) a steering index value (I_{US} of FIG. 4B) by applying a yaw rate ratio function (max(γ, α*µg/V)) to a yaw rate error ( · . - · ), and multiplying a correction gain (G_{US} of FIG. 4B) when the yaw rate error ( · ...... - · ) is negative (525 of FIG. 4A). In the yaw rate ratio function (max( · , · _{*} · · /V)), α may be a torque demand value, µ may be a friction coefficient, g may be a lateral acceleration value, and V may be a vehicle speed value. The torque demand value (α), friction coefficient (µ), lateral acceleration value (g), and vehicle speed value (V) may also be used to determine the correction gain (G_{US} in FIG. 4B). Depending on the design, the input variables of the yaw rate function (max( · , · * · · /V)) and the correction gain (G_{US} in FIG. 4B) may further include a tuning variable determined based on a performance test.

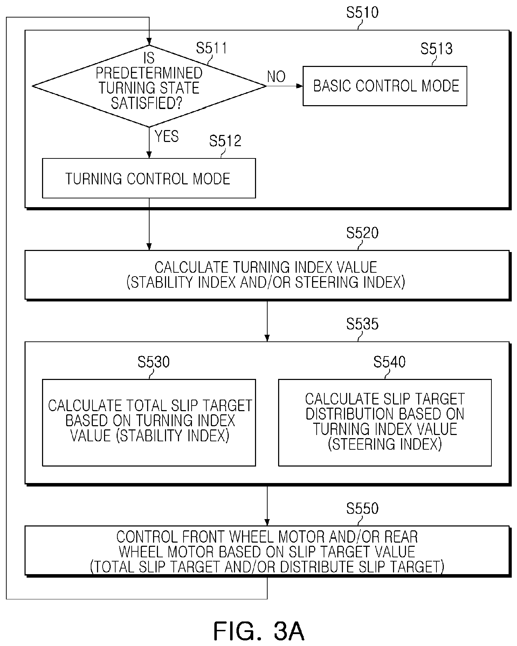

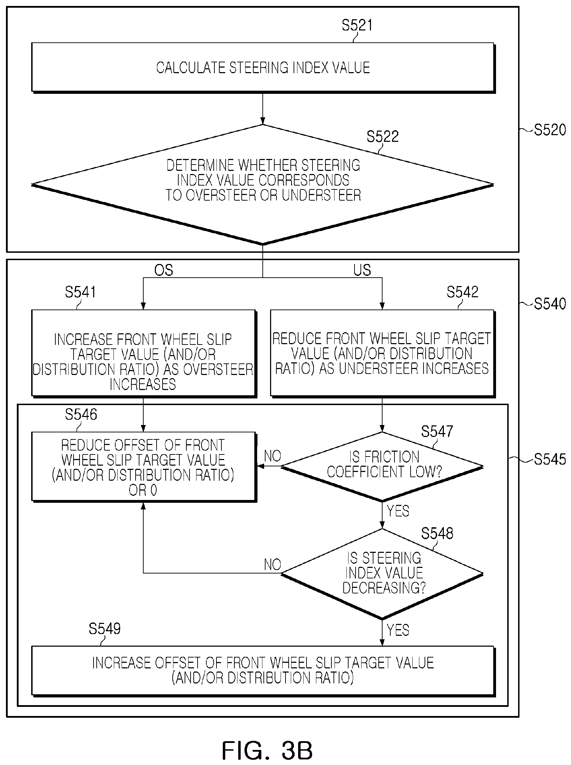

Referring to FIGS. 1A, 3A, and 3B, a vehicle turning control method according to an exemplary embodiment of the present disclosure may be executed by a controller 500, and include: an operation (S510) of determining whether a vehicle (V) satisfies a predetermined turning state condition based on a sensing value of a sensor unit 300 of the vehicle (V): an operation (S520) of determining a turning index value including a steering index value based on the sensing value of the sensor unit 300; operations (S535 and S540) of determining a slip target value or a slip target distribution ratio based on a turning index value; and an operation (S550) of controlling a front wheel motor 5 and/or a rear wheel motor 6 of the vehicle (V) so that a slip value of the front wheels 1 and 2 and/or the rear wheels 3 and 4 of the vehicle (V) follows the slip target value or the slip target distribution ratio, in a turning control mode (S512) in which the vehicle (V) satisfies a predetermined turning state condition. The operation (S540) of determining the slip target value or the slip target distribution ratio may include further increasing (S541) the slip target value or the slip target distribution ratio of the front wheels 1 and 2 as an absolute value of a steering index value (or yaw rate error) increases, when a steering index value (I_{OS} of FIG. 4A) corresponds to oversteer, and further reducing(S542) the slip target value or the slip target distribution ratio of the front wheels 1 and 2 as the absolute value of the steering index value (or yaw rate error) increases when a steering index value (I_{US} of FIG. 4B) corresponds to oversteer.

Accordingly, the vehicle turning control method according to an exemplary embodiment of the present disclosure may be configured for controlling turning of the vehicle (V) more accurately and rapidly, and efficiently improve turning stability of the vehicle (V) in a situation in which a slip value dynamically changes, such as a turning state.

For example, the slip target distribution unit 540 of the controller 500 may be configured to determine a slip target value or a slip target distribution ratio (S545) so that the slip target value or the slip target distribution ratio of the front wheels 1 and 2 is more sensitive to a friction coefficient (S546, S547, S549) when the steering index value (I_{US} of FIG. 4B) corresponds to understeer as compared to the case in which the steering index value (I_{OS} of FIG. 4A) corresponds to oversteer. For example, the slip target distribution unit 540 of the controller 500 may be configured to determine a slip target value or a slip target distribution ratio (S545) so that the slip target value or the slip target distribution ratio of the front wheels 1 and 2 is more sensitive to an inclination of the steering index value (S546, S548, S549) when the steering index value (I_{US} of FIG. 4B) corresponds to understeer as compared to the case in which the steering index value (I_{OS} of FIG. 4A) corresponds to oversteer. The motor control unit 550 of the controller 500 may be configured for controlling the front wheel motor 5 and/or the rear wheel motor 6 based on the slip target value or slip target distribution ratio.

Accordingly, the vehicle turning control apparatus and method according to an exemplary embodiment of the present disclosure may further improve stability (e.g., prevent slipping/spin of the entire vehicle) when the vehicle (V) is in an understeer state and/or a low-friction ground turning state.

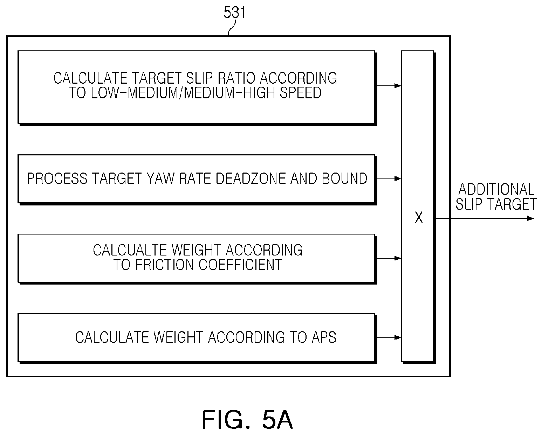

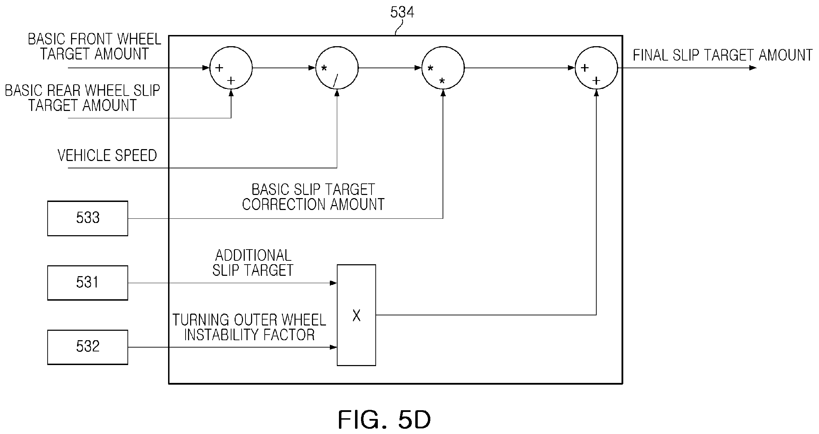

Referring to FIG. 2A and FIGS. 5A to 5D, the total slip target value calculation unit 530 may be configured to determine a stability index value (which may be included in a turning index value) based on at least one of a vehicle yaw rate value, a vehicle speed value, and a torque demand value of the sensor unit 300, or determine a stability index value based on at least two of the vehicle yaw rate value, the vehicle speed value, the torque demand value, a vehicle yaw rate, a vehicle longitudinal acceleration value, and a vehicle lateral acceleration value of the sensor unit 300 and a friction coefficient (a friction coefficient of the vehicle with respect to the ground).

For example, the total slip target value calculation unit 530 may include at least one of an additional slip target calculation unit 531, a turning external wheel instability factor calculation unit 532, a basic slip target correction amount calculation unit 533, and a slip target coordinator 534.

Referring to FIG. 5A, the additional slip target calculation unit 531 may be configured to determine an additional slip target value which may be included in a stability index value, and may be configured to determine a friction coefficient and a vehicle speed value (e.g., whether it is a low-medium speed or a medium-high speed) and a torque demand value (APS). Depending on the design, the additional slip target calculation unit 531 may prevent sensitive control by processing a control dead zone and bound conditions (e.g., applying a tuning variable) to the additional slip target value.

For example, when the vehicle speed value is a low-medium speed, lower than a reference, the additional slip target calculation unit 531 may apply 1 to 0.3 to a vehicle speed variable of the additional slip target value, and when the vehicle speed value is a medium-high speed, higher than a reference, the additional slip target calculation unit 531 may apply 0.3 to 0.1 to the vehicle speed variable of the additional slip target value.

For example, the additional slip target calculation unit 531 may reflect a driver's will to accelerate by increasing the friction coefficient variable of the additional slip target value as a friction coefficient increases. For example, the additional slip target calculation unit 531 may further stabilize vehicle turning by lowering the friction coefficient variable of the additional slip target value as the friction coefficient decreases.

For example, the additional slip target calculation unit 531 may reflect the driver's will to accelerate by increasing an APS variable of the additional slip target value as a torque demand value (APS) increases. For example, the additional slip target calculation unit 531 may not reflect the driver's will to accelerate by lowering the APS variable of the additional slip target value as the torque demand value (APS) decreases.

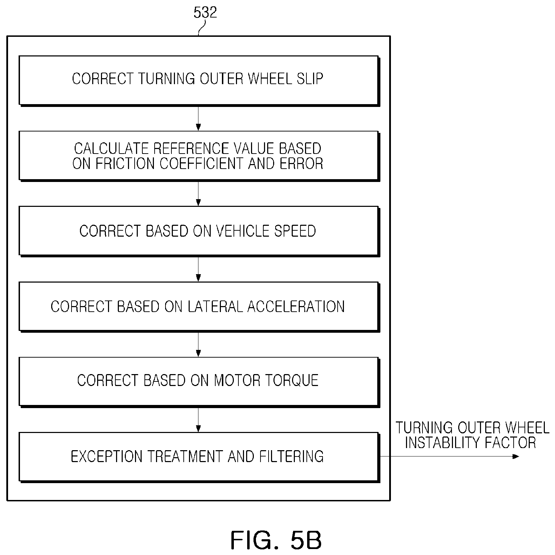

Referring to FIG. 5B, the turning external wheel instability factor calculation unit 532 may be configured to determine a turning external wheel instability factor value which may be included in a stability index value, and may be configured to determine the turning external wheel instability factor value based on at least one of a friction coefficient and a vehicle speed value, and at least two of a torque value of a front wheel motor 5 and/or a rear wheel motor 6, a turning external wheel slip value of the vehicle, and the vehicle lateral acceleration value.

The turning external wheel is a right front wheel or rear wheel when a vehicle turns left, and a left front wheel or rear wheel when a vehicle turns right. For example, the turning external wheel instability factor calculation unit 532 may be configured to determine a turning external wheel slip value by subtracting a vehicle speed value from a rotation speed value of the turning external wheel. The turning external wheel instability factor calculation unit 532 may be configured to determine a vehicle speed sensitivity value obtained by dividing a vehicle speed value by a tuning variable, and may be configured to determine a vehicle turning external wheel slip value by subtracting the vehicle speed sensitivity value from the turning external wheel slip value.

For example, the turning external wheel instability factor calculation unit 532 may be configured to determine a reference value, which is further increased as a friction coefficient increases, and may be configured to determine an error value by subtracting the reference value from a turning external wheel slip value. The turning external wheel instability factor calculation unit 532 may be configured to determine a turning external wheel instability factor value by further applying the error value to the vehicle speed value and/or the tuning value.

For example, the turning external wheel instability factor calculation unit 532 may be configured to determine a correction amount, which is reduced as a vehicle lateral acceleration value and/or a torque value decreases, and may be configured to determine a final turning external wheel instability factor value by applying the correction amount to the turning external wheel instability factor value (e.g., applying a multiplication operation).

For example, the turning external wheel instability factor calculation unit 532 may multiply the final turning external wheel instability factor value by 0 in an exceptional situation (e.g., braking operation, stop, or the like).

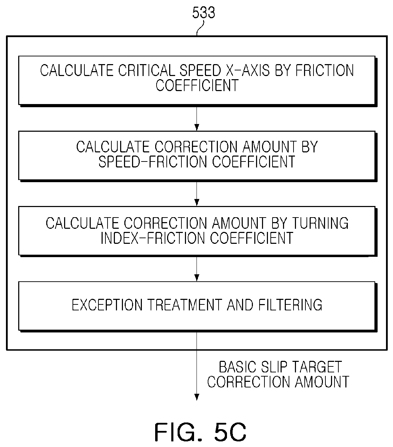

Referring to FIG. 5C, the basic slip target correction amount calculation unit 533 may be configured to determine a basic slip target correction amount value which may be included in a stability index value, and may be configured to determine the basic slip target correction amount value based on at least one of a friction coefficient and a vehicle speed value and a steering index value.

For example, the basic slip target correction amount calculation unit 533 may be configured to determine different critical speeds for each low friction coefficient/medium friction coefficient/high friction coefficient. The critical speed is a boundary value between a plurality of vehicle speed ranges. The greater the friction coefficient, the higher the critical speed.

For example, the basic slip target correction amount calculation unit 533 may be configured to determine the correction amount of a vehicle speed range corresponding to a real-time vehicle speed value among the plurality of vehicle speed ranges. The correction amount may be preset to decrease as the vehicle speed value increases.

For example, the basic slip target correction amount calculation unit 533 may reduce the correction amount as an absolute value of the steering index value increases, may increase the correction amount as the friction coefficient increases, and the final correction amount determined according to the steering index value and/or the friction coefficient may be a basic slip target correction amount value.

For example, the basic slip target correction amount calculation unit 533 can multiply the basic slip target correction amount value by 0 in an exceptional situation (e.g., brake operation, stop, or the like).

The slip target coordinator 534 may be configured to determine a final slip target amount value based on at least one of a turning external wheel instability factor value, a basic slip target correction amount value, and an additional slip target value. The final slip target amount value may be a total slip target value.

For example, the slip target coordinator 534 may be configured to generate a first value by dividing a vehicle speed value by a value obtained by adding a basic front wheel slip target amount value (e.g., an initial value) to a basic front wheel slip target amount value (e.g., an initial value). The slip target coordinator 534 may be configured to generate a second value by multiplying the first value by a basic slip target correction amount value. The slip target coordinator 534 may be configured to determine a final slip target amount value (total slip target value) by adding the second value to a product of the additional slip target value and the turning external wheel instability factor value.

Meanwhile, the controller 500 may estimate a friction coefficient of the vehicle with respect to the ground based on at least one of a vehicle yaw rate value, a vehicle longitudinal acceleration value, a vehicle lateral acceleration value, and a motor torque value (motor torque value of the front wheel motor and/or rear wheel motor) of the sensor unit 300.

For example, the controller 500 may estimate longitudinal force occurring in the vehicle and/or tire based on the vehicle longitudinal acceleration value and the motor torque value of the sensor unit 300, and may estimate a longitudinal friction coefficient based on the longitudinal force. For example, the controller 500 may estimate lateral force occurring in the vehicle and/or tire based on the vehicle yaw rate value and the vehicle lateral acceleration value of the sensor unit 300, and may estimate a lateral friction coefficient based on the lateral force. For example, the controller 500 may estimate a friction coefficient based on vector operation of the longitudinal friction coefficient and the lateral friction coefficient.

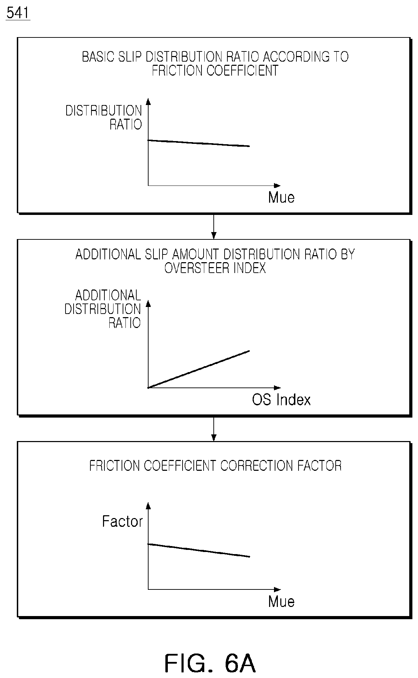

Referring to FIGS. 2A and 6A to 6G, the slip target distribution unit 540 may include at least one of a basic and oversteer (OS) distribution strategy unit 541, an understeer distribution strategy unit 542, and a release routine strategy unit 543.

Referring to FIG. 6A, the basic and oversteer (OS) distribution strategy unit 541 may decrease a slip target value (Factor) or slip target distribution ratio of a front wheel as a friction coefficient (Mue) increases, and may increase the slip target value or the slip target distribution ratio of the front wheel as a steer index (OS index) value corresponding to oversteer increases.

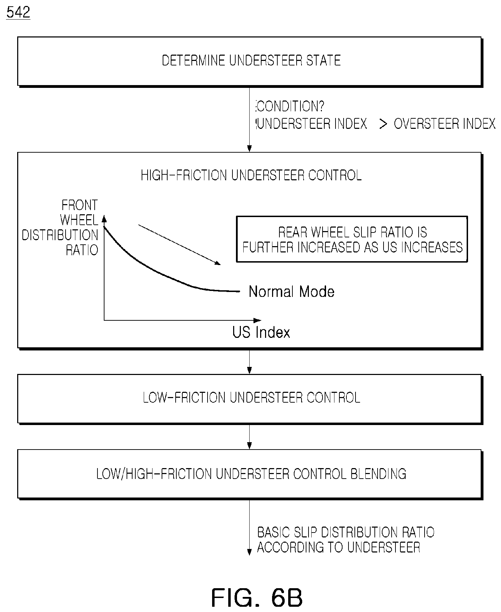

The slip target distribution unit 540 may be configured to determine a slip target value or slip target distribution ratio of the front wheel, which is more sensitive to the friction coefficient when a steering index value (US index of FIG. 6B) corresponds to understeer than when the steer index (OS index) value corresponds to oversteer.

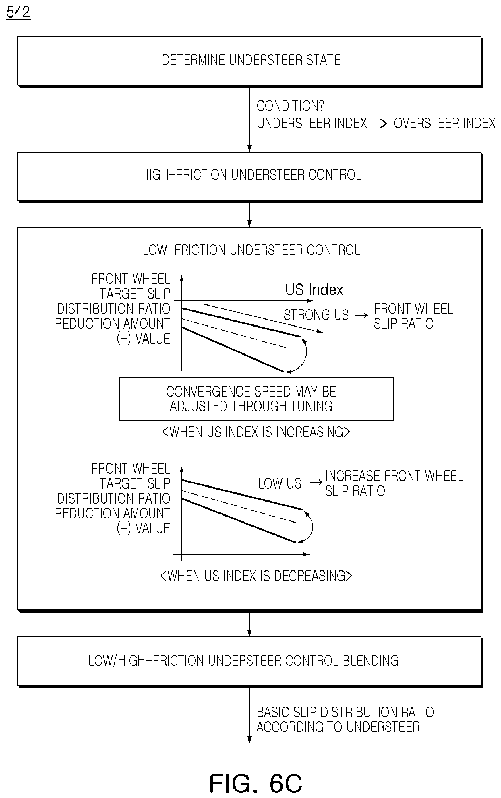

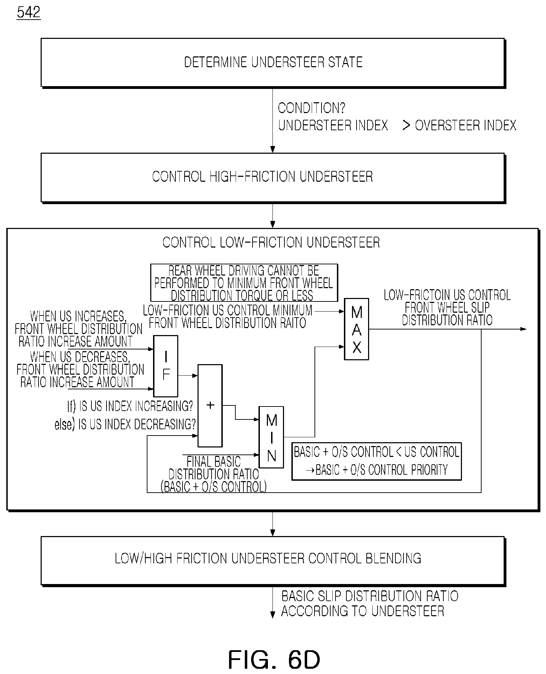

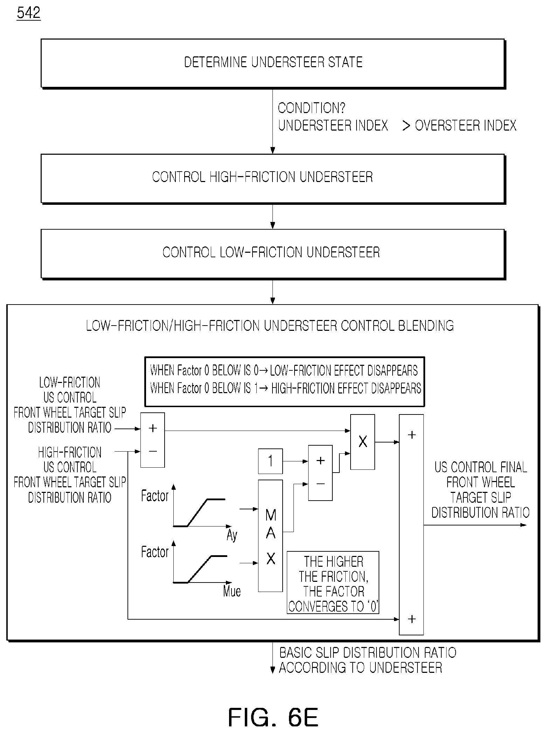

For example, unlike the basic and oversteer (OS) distribution strategy unit 541, the understeer distribution strategy unit 542 may be configured to determine a slip target value or a slip target distribution ratio of a front wheel, which is more sensitive to a friction coefficient, by use of at least two of a high friction understeer control mode of FIG. 6B, a low friction understeer control mode of FIG. 6C and FIG. 6D, and low/high friction understeer control blending of FIG. 6E.

Referring to FIG. 6B, the understeer distribution strategy unit 542 may decrease a slip target value or a slip target distribution ratio of a front wheel as a steering index (US index) value increases, in a high- friction understeer control mode (Normal Mode) in which the steering index (US index) value corresponds to understeer and a friction coefficient is higher than a reference friction range. Lowering the slip target distribution ratio of the front wheel may include increasing a slip target value and/or a slip target distribution ratio of a rear wheel.

Referring to FIG. 6C, the understeer distribution strategy unit 542 of the controller 500 may be configured to determine an offset of a slip target value or a slip target distribution ratio of a front wheel according to an inclination of the steering index value (US index) in a low-friction understeer control mode in which a steering index value (US Index) corresponds to understeer and a friction coefficient is lower than reference friction (or a reference friction range). The offset is a slip target value or a slip target distribution ratio when the steering index value (US Index) is 0. Accordingly, the vehicle turning control apparatus and method according to an exemplary embodiment of the present disclosure may further improve stability (e.g., prevent slipping/spin of the entire vehicle) when the vehicle (V) is in an understeer state and/or a low-friction ground turning state.

For example, the understeer distribution strategy unit 542 may be configured to determine that there is a high possibility of the entire vehicle slipping/spin when the inclination of the steering index value (US Index) is positive(increasing), and may greatly improve vehicle stability by lowering the offset. That is, in the low-friction understeer control mode, compared to the high-friction understeer control mode, the offset may be more sensitive to the inclination of the steering index value.

For example, the understeer distribution strategy unit 542 may rapidly converge a yaw rate error corresponding to the steering index value (US Index) to 0 by increasing the offset when the inclination of the steering index value (US Index) is negative(decreasing. The increase/decrease value of the offset may be adjusted through tuning.

Referring to FIG. 6D, when the steering index value (US Index) corresponds to understeer, the understeer distribution strategy unit 542 may apply an offset, which is more sensitive to a sensing value of the sensor unit as the friction coefficient decreases to the slip target value or the slip target distribution ratio of the front wheel.

For example, the understeer distribution strategy unit 542 may apply a stability index value determined based on a sensing value of the sensor unit to the offset as a final basic distribution ratio in the low-friction understeer control mode. On the other hand, the understeer distribution strategy unit 542 may hardly reflect the stability index value determined based on the sensing value of the sensor unit in the high-friction understeer control mode in the offset. That is, compared to the high-friction understeer control mode, the low-friction understeer control mode may reflect the stability index value determined based on the sensing value of the sensor unit to a greater extent in the control, so the offset may be more sensitive to the sensing value of the sensor unit at a low friction coefficient.

Referring to FIG. 6E, the understeer distribution strategy unit 542 may apply a smaller offset than the offset of the low-friction understeer control mode to the slip target value or the slip target distribution ratio of the front wheel when the steering index value corresponds to understeer and the friction coefficient is within a reference friction range.

That is, the understeer distribution strategy unit 542 may blend the low-friction understeer control mode and the high-friction understeer control mode when the friction coefficient is within a standard friction range. For example, when the friction coefficient is in the middle of a reference friction range, a factor of each of the low-friction understeer control mode and the high-friction understeer mode may be 0.5, and the offset of the low-friction understeer mode may be divided by half and applied to the slip target value or the slip target distribution ratio of the front wheel. Here, the factor and offset of the low-friction understeer control mode may decrease (e.g., converged to 0) as the friction coefficient increases within the reference friction range, and may be increased (e.g., converged to 1) as the friction coefficient decreases within the reference friction range.

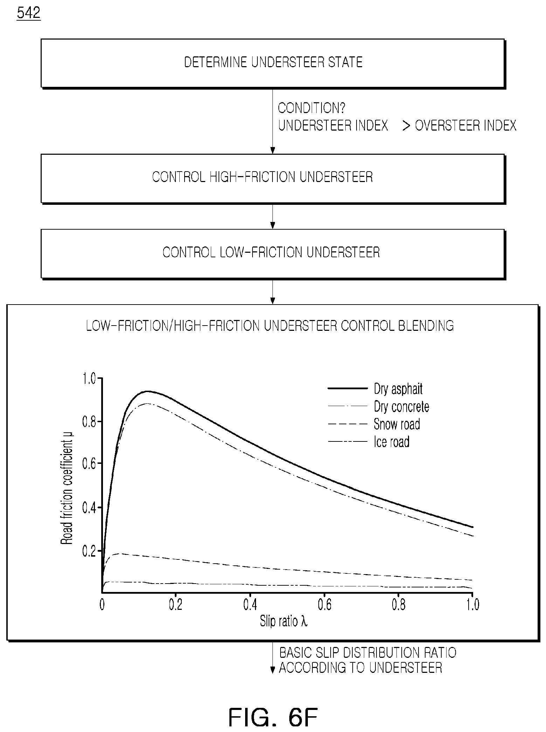

Referring to FIG. 6F, the understeer distribution strategy unit 542 may be configured to determine that a road friction coefficient (µ) is higher when a slip ratio (λ) corresponding to a slip value in real time is within a specific range (e.g., 0.1 to 0.3), and may decrease the factor and offset of the low-friction understeer control mode. On the other hand, the understeer distribution strategy unit 542 may be configured to determine that the road friction coefficient (µ) decreases when the slip ratio (λ) corresponding to the slip value in real time is outside of a specific range (e.g., 0.1 to 0.3), and may increase the factor and offset of the low-friction understeer control mode.

For example, dry asphalt or dry concrete may have a high friction coefficient when the slip ratio (λ) is within a certain range (e.g., 0.1 to 0.3), and may have a medium friction coefficient (a factor of a high-friction understeer control mode is high) when the slip ratio (λ) is outside of a certain range (e.g., 0.1 to 0.3). For example, a snow road or an ice road may have a medium friction coefficient (a factor of a high-friction understeer control mode is high) when the slip ratio (λ) is within a certain range (e.g., 0.1 to 0.3), and it may be a low friction coefficient when the slip ratio (λ) is outside of a certain range (e.g., 0.1 to 0.3).

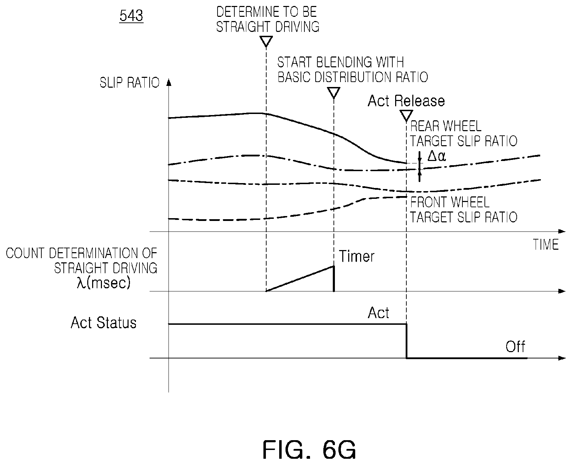

Referring to FIG. 6G, a release routine strategy unit 543 of the slip target distribution unit 540 may be configured to determine that a vehicle is driving straight when a yaw rate error corresponding to the steering index value is close to 0, and may count determination of straight-driving from the time at which the vehicle is determined to be driving straight.

Thereafter, the release routine strategy unit 543 may blend the slip target value or the slip target distribution ratio according to the oversteer/understeer control mode into a slip target basic distribution ratio when the count value reaches a specific value. The slip target basic distribution ratio is a slip target distribution ratio when entering/releasing a turning control mode. Thereafter, the release routine strategy unit 543 may release (Off) the turning control mode (Act) when the slip target value or the slip target distribution ratio becomes close to the slip target basic distribution ratio (e.g., when a distribution ratio difference value is less than or equal to a reference (α)). If, immediately after the count value reaches a specific value, the slip target value or the slip target distribution ratio is already close to the slip target basic distribution ratio, the release routine strategy unit 543 may immediately release (Off) the turning control mode (Act).

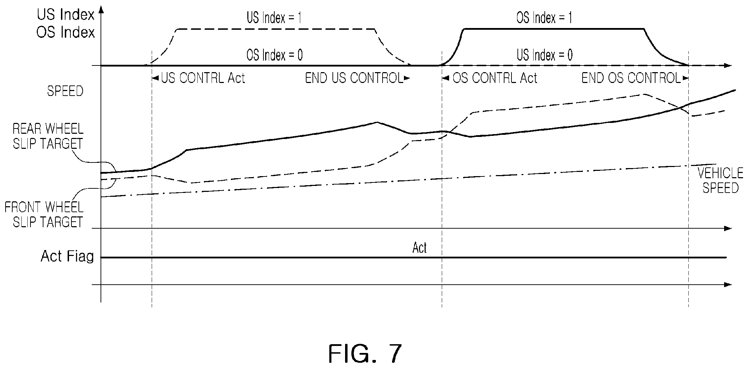

FIG. 7 assumes a case in which understeer and oversteer occur once while a vehicle speed gradually increases. Referring to FIG. 7, a controller may be configured to determine a steering index value (US Index = 1) in an understeer control mode, increase a rear wheel slip target value, and decrease a front wheel slip target value. The controller may be configured to determine a steering index value (OS Index = 1) in an oversteer control mode, increase a front wheel slip target value, and decrease a rear wheel slip target value.

Meanwhile, referring to FIG. 1B, a controller 500 of a vehicle turning control apparatus according to an exemplary embodiment of the present disclosure may be implemented as a computing system including at least one processor 501, a computer-readable storage medium 502, and a communication bus 503. For example, the controller 500 may be implemented as a microcontroller or an embedded system. The storage medium 502 may record one or more programs including commands for executing a vehicle turning control method according to an exemplary embodiment of the present disclosure. The communication bus 503 may interconnect various other components of the computing device 500, including the processor 501, the computer-readable storage medium 502.

The processor 501 may cause the computing device to operate according to the above-described exemplary embodiments of the present disclosure. For example, the processor 501 may execute one or more programs stored in the computer-readable storage medium 502. The one or more programs may include one or more computer executable instructions, wherein, when executed by the processor 501, the computer-readable executable instructions may be configured to cause the computing device to perform operations according to an exemplary embodiment of the present disclosure.

The computer-readable storage medium 502 may be configured to store computer-executable instructions or program code, program data, and/or other suitable forms of information. A program 502a stored on the computer-readable storage medium 502 includes a set of instructions executable by the processor 501. In an exemplary embodiment of the present disclosure, the computer-readable storage medium 502 may include a memory (a volatile memory such as a random access memory, a non-volatile memory, or a suitable combination thereof), one or more magnetic disk storage devices, optical disk storage devices, flash memory devices, other forms of storage media that may be accessed by the computing device and store desired information, or suitable combinations thereof.

The controller 500 may also include one or more input/output interfaces 505 providing an interface for one or more input/output devices 504 and one or more network communication interfaces 506. The input/output interfaces 505 and the network communication interfaces 506 are connected to a communication bus 503. The network may be one of a cellular network, such as a global system for mobile communications (GSM), enhanced data rates for GSM evolution (EDGE), a general packet radio service (GPRS), a Code Division Multiple Access (CDMA), a time division CDMA(TD-CDMA), a Universal Mobile Telecommunications System (UMTS), a Long Term Evolution (LTE), or another cellular network, and may also be implemented as Ethernet, Media Oriented Systems Transport (MOST), Flexray, Controller Area Network (CAN), Local Interconnect Network (LIN), Internet, Bluetooth, Near Field Communication (NFC), Zigbee, Radio Frequency (RF), or the like.

The input/output device 504 may be connected to other components of the computing device through the input/output interface 505. The exemplary input/output device 504 may include an input device such as a pointing device (a mouse, a trackpad, or the like), a keyboard, a touch input device (a touchpad, a touchscreen, or the like), a voice or sound input device, various types of sensor devices, and/or an imaging device, and an output device such as a display device, a printer, a speaker, and/or a network card. The exemplary input/output device 504 may be included inside the computing device as a component constituting the computing device, or may be connected to the computing device as a separate device, distinct from the computing device.

Meanwhile, embodiments of the present disclosure may include a program for performing the methods described in the present specification on a computer, and a computer readable recording medium including the program. The computer-readable recording medium may include program instructions, local data files, local data structures, or the like, alone or in a combination thereof. The medium may be specially designed and configured for the present disclosure, or may be commonly available in the field of computer software. Examples of the computer-readable medium may include a hardware device specially configured to store a magnetic medium such as hard disks, floppy disks and magnetic tapes, an optical recording medium such as CD-ROMs and DVDs, and program instructions such as ROM, RAM, and a flash memory and perform the same. Examples of the program may include not only machine language codes generated by a compiler, but also high-level language codes that may be executed by a computer using an interpreter.

As set forth above, according to an exemplary embodiment of the present disclosure, a vehicle turning control apparatus and method and a vehicle and a storage medium including the same may more accurately and rapidly control turning of a vehicle (V) based on a slip principle in a situation in which a slip value dynamically changes, such as a turning state, and may efficiently improve turning stability of the vehicle (V).

The present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes would be obvious to those of ordinary skill in the art.

While example embodiments have been illustrated and described above, it will be apparent to those skilled in the art that modifications and variations could be made without departing from the scope of the present disclosure as defined by the appended claims.

## Claims

1. A vehicle turning control apparatus, comprising:
a controller configured to control a front wheel motor driving a front wheel of a vehicle and a rear wheel motor driving a rear wheel of the vehicle based on a sensing value detected by a sensor unit of the vehicle,
wherein the controller is further configured to:
determine whether the vehicle satisfies a predetermined turning state condition based on the sensing value of the sensor unit, and
control at least one of the front wheel motor or the rear wheel motor so that a slip value of at least one of the front wheel or the rear wheel follows a slip target value or a slip target distribution ratio based on the sensing value of the sensor unit, in a turning control mode in which the vehicle satisfies the predetermined turning state condition.

2. The vehicle turning control apparatus of claim 1, wherein the controller is further configured to,
in a basic control mode in which the vehicle does not satisfy the predetermined turning state condition, control at least one of the front wheel motor or the rear wheel motor so that a control gain of a torque demand value of the sensor unit is further increased as compared to a control gain of a torque demand value in the turning control mode, and the torque demand value is distributed to at least one of the front wheel or the rear wheel.

3. The vehicle turning control apparatus of claim 1, wherein the controller is further configured to:
determine a turning index value based on the sensing value of the sensor unit, and
determine the slip target value or the slip target distribution ratio based on the turning index value.

4. The vehicle turning control apparatus of claim 3,
wherein the turning index value includes a steering index value, and
wherein the controller is further configured to:
determine a target yaw rate value based on a steering angle value and a vehicle speed value of the sensor unit, and
determine the steering index value based on a difference between the target yaw rate value and a vehicle yaw rate value of the sensor unit.

5. The vehicle turning control apparatus of claim 4, wherein the controller is further configured to:
estimate a friction coefficient of the vehicle with respect to a ground based on at least one of a vehicle yaw acceleration, a vehicle longitudinal acceleration value, a vehicle lateral acceleration value, or a motor torque value of the sensor unit, and
determine a stability index value based on the friction coefficient and at least two of a vehicle yaw rate value, a vehicle speed value, a torque demand value, the vehicle yaw acceleration, the vehicle longitudinal acceleration value, or the vehicle lateral acceleration value of the sensor unit,
wherein the turning index value further includes the stability index value.

6. The vehicle turning control apparatus of claim 5,
wherein the stability index value includes a turning external wheel instability factor value, a basic slip target correction amount value, and an additional slip target value, and
wherein the controller is further configured to:
determine the basic slip target correction amount value based on the steering index value and at least one of the friction coefficient or the vehicle speed value,
determine the additional slip target value based on the torque demand value and at least one of the friction coefficient or the vehicle speed value, and
determine the turning external wheel instability factor value based on at least one of the friction coefficient or the vehicle speed value, and at least two of a torque value of at least one of the front wheel motor or the rear wheel motor, a turning external wheel slip value of the vehicle, or the vehicle lateral acceleration value.

7. The vehicle turning control apparatus of claim 4,
wherein the turning index value further includes a stability index value, and
wherein the controller is further configured to:
determine the stability index value based on at least one of a vehicle yaw rate value, a vehicle speed value, or a torque demand value of the sensor unit,
determine a total slip target value based on the stability index value, and
determine the slip target value or the slip target distribution ratio according to distribution of the total slip target value based on the steering index value.

8. The vehicle turning control apparatus of claim 4,
wherein, based on that the steering index value corresponds to oversteer, the controller is further configured to control at least one of the front wheel motor or the rear wheel motor so that a slip target value or a slip target distribution ratio of the front wheel is further increased as an absolute value of the steering index value increases, and
based on that the steering index value corresponds to understeer, the controller is further configured to control at least one of the front wheel motor or the rear wheel motor so that the slip target value or the slip target distribution ratio of the front wheel is further reduced as the absolute value of the steering index value increases.

9. The vehicle turning control apparatus of claim 8, wherein, in a low-friction understeer control mode in which the steering index value corresponds to the understeer and a friction coefficient of the vehicle with respect to a ground is lower than a reference friction,
the controller is further configured to control at least one of the front wheel motor or the rear wheel motor so that an offset of the slip target value or the slip target distribution ratio of the front wheel changes according to an inclination of the steering index value.

10. The vehicle turning control apparatus of claim 8, wherein, as compared to in a high-friction understeer control mode in which the steering index value corresponds to the understeer and a friction coefficient of the vehicle with respect to a ground is higher than a reference friction range, the controller is further configured to control at least one of the front wheel motor or the rear wheel motor by applying an offset, which is more sensitive to an inclination of the steering index value to the slip target value or the slip target distribution ratio of the front wheel, in a low-friction understeer control mode in which the steering index value corresponds to the understeer and the friction coefficient is lower than the reference friction range,
wherein, based on that the steering index value corresponds to the understeer and the friction coefficient is within the reference friction range,
the controller is further configured to control at least one of the front wheel motor or the rear wheel motor by applying a smaller offset than the offset of the low-friction understeer control mode to the slip target value or the slip target distribution ratio of the front wheel.

11. The vehicle turning control apparatus of claim 8, wherein, based on that the steering index value corresponds to the understeer, the controller is further configured to control at least one of the front wheel motor or the rear wheel motor by applying an offset, which is more sensitive to a sensing value of the sensor unit as a friction coefficient of the vehicle with respect to a ground decreases to the slip target value or the slip target distribution ratio of the front wheel.

12. The vehicle turning control apparatus of claim 11, wherein the controller is further configured to:
estimate the friction coefficient based on at least one of a vehicle yaw acceleration, a vehicle longitudinal acceleration value, a vehicle lateral acceleration value, or a motor torque value of the sensor unit, and
control at least one of the front wheel motor or the rear wheel motor so that the slip target value or the slip target distribution ratio of the front wheel is more sensitive to the friction coefficient based on that the steering index value corresponds to the understeer as compared to a case in which the steering index value corresponds to the oversteer.

13. A vehicle turning control apparatus, comprising:
a controller configured to control a front wheel motor driving a front wheel of a vehicle and a rear wheel motor driving a rear wheel of the vehicle based on a sensing value detected by a sensor unit of the vehicle,
wherein the controller is further configured to:
determine a target yaw rate value based on a steering angle value and a vehicle speed value of the sensor unit,
determines a steering index value based on a difference between the target yaw rate value and a vehicle yaw rate value of the sensor unit,
control at least one of the front wheel motor or the rear wheel motor so that a slip target value or a slip target distribution ratio of the front wheel is further increased as an absolute value of the steering index value increases based on that the steering index value corresponds to oversteer, and
control at least one of the front wheel motor or the rear wheel motor so that the slip target value or the slip target distribution ratio of the front wheel is further reduced as the absolute value of the steering index value increases based on that the steer index value corresponds to understeer.

14. The vehicle turning control apparatus of claim 13, wherein the controller is further configured to:
determine a stability index value based on at least one of a vehicle yaw rate value, a vehicle speed value, or a torque demand value of the sensor unit,
determine a total slip target value based on the stability index value, and
determine the slip target value or the slip target distribution ratio according to distribution of the total slip target value based on the steering index value.

15. The vehicle turning control apparatus of claim 14, wherein the controller is further configured to:
estimate a friction coefficient of the vehicle with respect to a ground based on at least one of a vehicle yaw acceleration, a vehicle longitudinal acceleration value, a vehicle lateral acceleration value, or a motor torque value of the sensor unit, and
determine the stability index value based on the friction coefficient and at least two of the vehicle yaw rate value, the vehicle speed value, the torque demand value, the vehicle yaw acceleration, the vehicle longitudinal acceleration value, or the vehicle lateral acceleration value of the sensor unit.

16. The vehicle turning control apparatus of claim 15, wherein the controller is further configured to control at least one of the front wheel motor or the rear wheel motor so that the slip target value or the slip target distribution ratio of the front wheel is more sensitive to the friction coefficient based on that the steering index value corresponds to the understeer as compared to a case in which the steering index value corresponds to the oversteer.

17. The vehicle turning control apparatus of claim 16, wherein the controller is further configured to control at least one of the front wheel motor or the rear wheel motor so that the slip target value or the slip target distribution ratio of the front wheel is more sensitive to an inclination of the steering index value based on that the steering index value corresponds to the understeer as compared to the case in which the steering index value corresponds to the oversteer.

18. A vehicle comprising:
the vehicle turning control apparatus of any one of claims 1-17, the sensor unit, the front wheel motor, and the rear wheel motor.

19. A vehicle turning control method, comprising:
determining whether a vehicle satisfies a predetermined turning state condition based on a sensing value detected by a sensor unit of the vehicle;
determining a turning index value including a steering index value based on the sensing value of the sensor unit;
determining a slip target value or a slip target distribution ratio based on the turning index value; and
controlling at least one of a front wheel motor or a rear wheel motor so that a slip value of at least one of the front wheel or the rear wheel of the vehicle follows the slip target value or the slip target distribution ratio, in a turning control mode in which the vehicle satisfies the predetermined turning state condition,
wherein the determining of the slip target value or the slip target distribution ratio includes, further increasing the slip target value or the slip target distribution ratio of the front wheel as an absolute value of the steering index value increases, based on that the steering index value corresponds to oversteer, and further reducing the slip target value or the slip target distribution ratio of the front wheel as the absolute value of the steering index value increases, based on that the steering index value corresponds to understeer.

20. A storage medium having recorded thereon one or more programs including commands for executing the vehicle turning control method of claim 19.
